# EUROPEAN PATENT SPECIFICATION

(11) **EP 2 159 988 B1**
(45) Date of publication and mention of the grant of the patent: **21.03.2018**
(21) Application number: 09177452.1
(22) Date of filing: 21.08.2006
(51) Int. Cl.: H04L 29/06, H04L 29/08

(54) **Authentication and authorisation of a remote client**
Authentifikation und Autorisierung eines fernen Clients
Authentification et autorisation d'un client à distance

(30) Priority: 22.08.2005 FI 20055442
(43) Date of publication of application: 03.03.2010
(62) Divisional of application: 06778544.4
(73) Proprietor: Telia Company AB, 169 94 Solna (SE)
(72) Inventor: Korhonen, Jouni, 11100, Riihimäki (FI)
(74) Representative: Berggren Oy, Tampere

(56) References cited:
- EP-A- 1 176 781
- MALKIN G S: "Dial-in virtual private networks using layer 3 tunneling" LOCAL COMPUTER NETWORKS, 1997. PROCEEDINGS., 22ND ANNUAL CONFERENCE ON MINNEAPOLIS, MN, USA 2-5 NOV. 1997, LOS ALAMITOS, CA, USA,IEEE COMPUT. SOC, US, 2 November 1997 (1997-11-02), pages 555-561, XP010252462 ISBN: 0-8186-8141-1
- CHARLIE KAUFMAN ET AL: "Internet Key Exchange (IKEv2) Protocol; draft-ietf-ipsec-ikev2-17.txt" IETF STANDARD-WORKING-DRAFT, INTERNET ENGINEERING TASK FORCE, IETF, CH, vol. ipsec, no. 17, 23 September 2004 (2004-09-23), XP015038402 ISSN: 0000-0004
- ATSUSHI KARA: "Secure Remote Access from Office to Home" IEEE COMMUNICATIONS MAGAZINE, IEEE SERVICE CENTER, PISCATAWAY, US, vol. 39, no. 10, October 2001 (2001-10), pages 68-72, XP011091817 ISSN: 0163-6804

## Description

### Field of the invention

The present invention relates to network security, and more particularly to authentication/authorization of a remote client.

### Background of the invention

IPSec (IP security) is a standard for securing Internet Protocol (IP) communications by encrypting and/or authenticating all IP packets. Being an obligatory part of IPv6 (Internet Protocol version 6), IPSec is expected to become widely deployed as IPv6 becomes more popular. IPSec protocols are defined in IETF RFCs 2401-2412.

IPSec is set of cryptographic protocols for securing packet flows and key exchange. IPSec includes two protocols for securing packet flows, i.e. Encapsulating Security Payload (ESP) and Authentication Header (AH), and one key exchange protocol, i.e. the IKE (Internet Key Exchange) protocol. IKE uses a Diffie-Hellman key exchange to set up a shared session secret, from which cryptographic keys are derived. Public key techniques or, alternatively, preshared secrets, are used to mutually authenticate the communicating parties.

IPsec is mainly used to construct Virtual Private Networks (VPN), whereby IKE protocol is used by VPNs to establish a secure connection between a server and a remote client. IPSec includes two operational modes, i.e. a tunnel mode, wherein security of packet traffic is provided to several machines by a single node (e.g. an IPSec gateway), and a transport mode, wherein the end-point computers do the security processing. If a VPN session is established as an end-to-end VPN session between a remote client and a corporate gateway, complete privacy and data integrity is provided for corporate users who access the corporate network from outside an intranet. However, because packets are encrypted end-to-end from the client to the corporate VPN gateway, it is not possible for network operators or service providers to provide value-added services to these corporate users, as such services require visibility into the packet headers and application data.

In a network-based VPN, the user VPN session is terminated at the IPSec gateway within the operator network, and another VPN session (either an IPSec or a non-IPSec session) from the IPSec gateway to the corporate VPN gateway is used to carry traffic from the operator network to the corporate network. Since packet headers and application data this way become visible at the operator network, value-added services can be provided by the operator. The advantages of the network-based VPN approach provided to corporate customers are apparent. It is possible for the corporate to outsource value-added services, which require packet and application header inspection, such as firewall service, internet-offload, caching service, etc. Moreover, since data packets of all VPN users are transported over a single VPN session from the operator to the corporate VPN gateway, the amount of VPN session information, including Security Association (SA) information, which needs to be maintained at the corporate VPN gateway, can be minimized, and consequently significant data aggregation is achieved.

However, the IKE protocol, or the IKEv2 (version 2), which is currently being standardized by the IETF, does not enable more than one authentication/authorization procedure to be carried out between a VPN client and a VPN gateway. In the network-based VPN approach, this authentication/authorization procedure is carried out in the gateway server of the operator network. Corporates may consider this inadequate in terms of their internal security, and accordingly, corporates may be reluctant to choose a network-based VPN service. A further authentication/authorization procedure would require more complicated solutions, e.g. nested tunnelling or an additional security protocol inside the IPSec tunnel, which are not engaged to the first authentication/authorization procedure, and furthermore, they are not supported by the IKEv2.

D1: Malkin, Gary, "Dial-in virtual private networks using Layer 3 tunneling", discloses a network-based VPN, wherein a first tunnel is established between a remote user and an operator gateway (Remote Access Server), and the (first) user VPN session is terminated at the operator gateway. Then another tunnel is established between the operator gateway (Remote Access Server) and the gateway to the corporate network, whereby another VPN session from the operator gateway to the corporate VPN gateway is used to carry traffic from the operator network to the corporate network.

D2: Atsushi Kara, "Secure remote access from office to home" discloses IPSec and IKE protocol and recognises, as well, nested tunnelling as an infeasible solution. As a solution to avoid nested tunnelling, D2 suggests an arrangement of an authentication server in between the end-users, whereby the end-users first initiate IP tunnel connection to the authentication server. After authenticating the end-users, the authentication server relays the IP traffic between the two IP tunnels, where after the end-users start to negotiate an end-to-end connection between each other. Thus, in D2 the server has no control over the tunnels after the end-to-end connection between the end users has been established.

### Summary of the invention

Now there is invented an improved method and technical equipment implementing the method, by which the IKEv2 can be used to authenticate and authorize a remote client both in the operator network and in the corporate network. Various aspects of the invention include a method, a communication system and a terminal, which are characterized by what is stated in the independent claims. Various embodiments of the invention are disclosed in the dependent claims.

According to a first aspect, a method according to the invention is based on the idea of providing an authentication/authorisation of a remote client terminal in a network comprising an operator gateway and an operator authentication server, and an external gateway and an external authentication server, wherein a mutual authentication protocol is agreed between said authentication servers. The method comprises: establishing a first secured tunnel between the client terminal and the operator gateway using an encryption key exchange protocol; authenticating and authorising the client terminal in the operator authentication server; initiating a second authentication/authorisation procedure from the client terminal towards the external authentication server using the first secured tunnel; transforming, in the operator gateway, at least one message involved in the second authentication/authorisation procedure to be in accordance with said mutual authentication protocol; authenticating and authorising the client terminal in the external authentication server; establishing a second tunnel between the operator gateway and the external gateway, wherein the encryption key exchange protocol is the Internet Key Exchange (IKE) protocol, whereby the method further comprises: encrypting the messages involved in the second authentication/authorisation procedure, when transmitted between the client terminal and the operator authentication server, by the established IKE security association (SA), said messages including at least one IKEv2 INFORMATIONAL message exchange with a dedicated payload field for a second authentication/authorisation procedure; and controlling the maintenance of the first secured tunnel and the second secured tunnel in the operator gateway such that in response to a removal of either of said tunnels, the remaining tunnel is removed automatically.

According to an embodiment, in response to the second authentication/authorisation procedure not succeeding, the failure is indicated in an error message with a dedicated payload field for the failure of the second authentication/authorisation procedure.

The arrangement according to the invention provides significant advantages. Since the second authentication/authorization procedure towards an external AAA entity is carried out inside the already established IKE SA (or IPSec SA), the traffic is secured with the IKE SA. Furthermore, the second authentication/authorization procedure does not require IPSec; it is only required that the iKEv2 negotiation is supported. Moreover, the two-phase authentication/authorization procedure advantageously remains backwards compatible with the current IKEv2, i.e. if a client terminal or a gateway does not support the new messages, the IKEv2 protocol can still be used; only the features of the second authentication/ authorization procedure are not available. From the corporate's viewpoint, the two-phase authentication/ authorization procedure offers a simple way to provide the client authentication also in the corporate network. From the operator's viewpoint, the two-phase authentication/authorization procedure connects the authentication/ authorization procedure more closely to operator network by utilising the existing infrastructure of the operator network. This also facilitates the operator in offering various value-added services.

According to a second aspect, there is provided a communication network comprising: a client terminal; an operator gateway and an operator authentication server; an external gateway and an external authentication server; in which network a mutual authentication protocol is agreed between said authentication servers, wherein the client terminal and the operator gateway are arranged to establish a first secured tunnel between each other using an encryption key exchange protocol; the operator authentication server is arranged to authenticate and authorise the client terminal; the client terminal is arranged to initiate a second authentication/authorisation procedure towards the external authentication server using the first secured tunnel; the operator gateway is arranged to transform at least one message involved in the second authentication/authorisation procedure to be in accordance with said mutual authentication protocol; the external authentication server is arranged to authenticate and authorise the client terminal; the operator gateway is arranged to establish a second tunnel to the external gateway for granting an access to the terminal, wherein the encryption key exchange protocol is the Internet Key Exchange (IKE) protocol; the messages involved in the second authentication/authorisation procedure, when transmitted between the client terminal and the external operator authentication server are arranged to be encrypted by the established IKE security association (SA), said messages including at least one IKEv2 INFORMATIONAL message exchange with a dedicated payload field for a second authentication/authorisation procedure; and the operator gateway is arranged to control the maintenance of the first secured tunnel and the second secured tunnel in such that in response to a removal of either of said tunnels, the remaining tunnel is removed automatically.

According to a third aspect, there is provided a terminal arranged to operate according to the method of the invention.

### List of drawings

In the following, various embodiments of the invention will be described in more detail with reference to the appended drawings, in which
- Fig. 1: shows a typical VPN use case, wherein a client terminal connects back to its corporate network through an IPSec protected tunnel;
- Fig. 2: shows a signalling chart of an authentication/authorisation method according to an embodiment of the invention;
- Fig. 3a: shows an example of a payload type format for a key exchange message according to an embodiment of the invention;
- Fig. 3b: shows another example of a payload type format for a key exchange message according to an embodiment of the invention; and
- Fig. 4: shows a client terminal according to an embodiment of the invention in a reduced block chart.

### Description of embodiments

For the sake of illustrating the aspects of the invention, some basic procedures of the IKEv2 are discussed herein briefly. For a more complete disclosure of the current status of the IKEv2, a reference is made to the Internet draft: *"*Internet Key Exchange (IKEv2) Protocol", draft-ietf-ipsec-ikev2-17, September 23, 2004.

IKE performs mutual authentication between two parties and establishes an IKE security association (SA) that includes shared secret information that can be used to efficiently establish SAs for ESP and/or AH and a set of cryptographic algorithms to be used by the SAs to protect the traffic that they carry. The SAs for ESP and/or AH that get set up through that IKE_SA are called as CHILD_SAs.

All IKE communications consist of pairs of a request message and a response message. The pair of messages is called an "exchange". When establishing an IKE_SA, the first two exchanges are called IKE_SA_INIT exchange and IKE_AUTH exchange. When the IKE_SA has been established, the subsequent IKE exchanges are either CREATE_CHILD_SA exchanges or INFORMATIONAL exchanges. In a normal procedure, there is a single IKE_SA_INIT exchange and a single IKE_AUTH exchange (a total of four messages) to establish the IKE_SA and the first CHILD_SA. However, in some exceptional cases, there may be more than one of each of these exchanges. Nonetheless, all IKE_SA_INIT exchanges must be completed before any other exchange type, then all IKE_AUTH exchanges must be completed, and only then any number of CREATE_CHILD_SA and INFORMATIONAL exchanges may occur in any order.

The first exchange of the IKE session (i.e. IKE_SA_INIT) negotiates the security parameters for the IKE_SA, sends nonces ("number used once", i.e. time variables preventing old communications to be reused in replay attacks), and sends Diffie-Hellman values. The second exchange of the IKE session (i.e. IKE_AUTH) transmits identities, proves knowledge of the secrets corresponding to the two identities, and sets up an SA for the first (and often only) AH and/or ESP CHILD_SA. Accordingly, in many occasions, only a single CHILD_SA is needed between the IPSec endpoints and therefore there would be no additional exchanges.

However, subsequent exchanges may be used to establish additional CHILD_SAs between the same authenticated pair of endpoints (i.e. CREATE_CHILD_SA exchange) and to perform housekeeping functions, like deleting an SA, reporting error conditions, etc. (i.e. INFORMATIONAL exchange). These subsequent exchanges cannot be used until the initial exchanges have been completed.

Each IKE message begins with the IKE header (HDR), which is followed by one or more IKE payloads each identified by a "Next Payload" field in the preceding payload. Payloads are processed in the order in which they appear in an IKE message by invoking the appropriate processing routine according to the "Next Payload" field in the IKE header and subsequently according to the "Next Payload" field in the IKE payload itself, until a "Next Payload" field of zero indicates that no payloads follow. An INFORMATIONAL request with no payload (other than the empty Encrypted payload required by the syntax) is commonly used as a check for liveliness of a session.

There is a plurality of payload types defined to be used in IKE messages for various purposes. These payload types are allocated values between 0 and 255. Payload type value 0 indicates that there is no next payload. Payload type values 1 - 32 are used in the code assignments for the IKEv1. Payload type values 33 - 48 are defined for the IKEv2 for carrying out various actions in IKE session management. Payload type values 49 - 127 are reserved to IANA for future assignment in the IKEv2. Payload type values 128-255 are for private use among mutually consenting parties.

In addition to authentication using public key signatures and shared secrets, IKE supports an authentication process using methods of Extensible Authentication Protocol (EAP), defined in RFC 3748. The EAP provides an asymmetric authentication process, designed for the purpose of a user authenticating to a server, for which reason the EAP, if used within the IKE, must be used in conjunction with a public key signature based authentication of the responder to the initiator, i.e. from the server to the terminal client. Accordingly, the EAP is implemented in IKE as additional IKE_AUTH exchanges that must be completed in order to initialize the IKE_SA. IKE includes a separate payload type defined for the EAP (payload type value 48).

The EAP authentication can preferably be utilized, if there is a separate authentication server, e.g. a so-called AAA (Authentication, Authorization, Accounting) system, connected to the IPSec gateway. The AAA servers are e.g. RADIUS or Diameter servers, which support the EAP authentication. The authentication signalling is carried out using a protocol specific to the used AAA system. Accordingly, the server checks that the user identification information is correct, and if accepted, the server will then authorize access to the system protected by the IPSec gateway and select an IP address, L2TP parameters, etc. The AAA server will also be notified when the session starts and stops, so that the user can be billed accordingly; or the data can be used for statistical purposes.

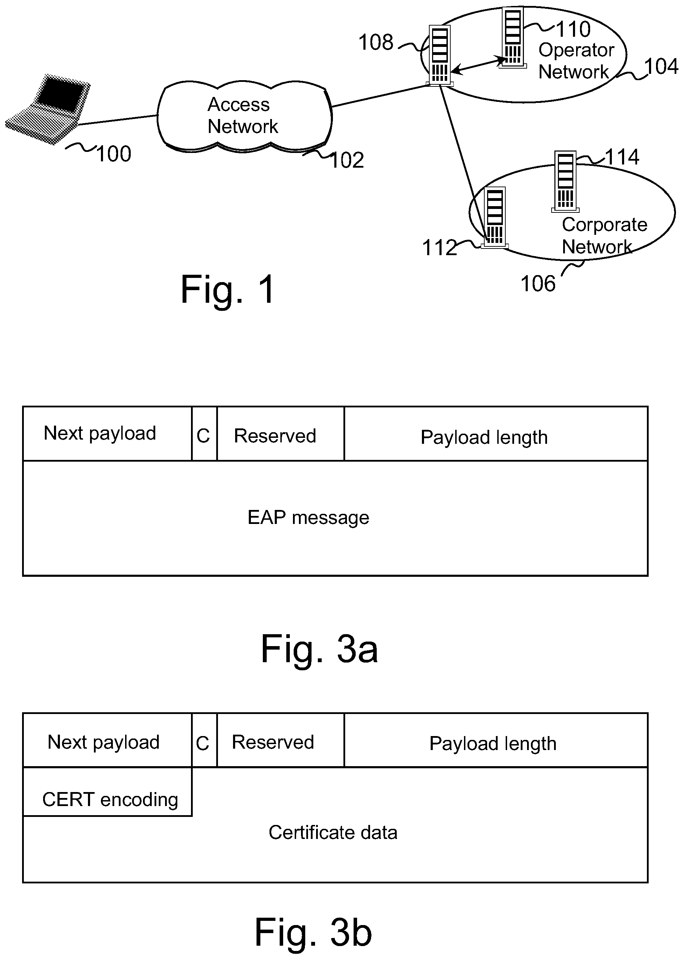

In a typical VPN use case, as illustrated in Fig. 1, a protected client terminal 100 (typically a mobile terminal or a portable roaming computer) connects back to its corporate network 106 through an IPSec protected tunnel. The access network 102 may be any wired or wireless communication network supporting IP based communication, e.g. public Internet, a 2G/3G mobile network, or a WLAN network. The tunnel is established via a tunnel gateway 108 (e.g. an IPSec gateway) of the operator network 104 to an IPSec gateway 112 of the corporate network 106. Both the operator network 104 and the corporate network 106 may further include AAA systems 110, 114 for authenticating and authorising the terminal. The user of the terminal may use this tunnel only to access information on the corporate network, or all of the terminal traffic may be tunnelled back through the corporate network in order to take advantage of the protection provided by a corporate firewall. In either case, the terminal requires an IP address associated with the corporate IPSec gateway so that packets returned to it will first go to the security gateway and then be tunnelled back.

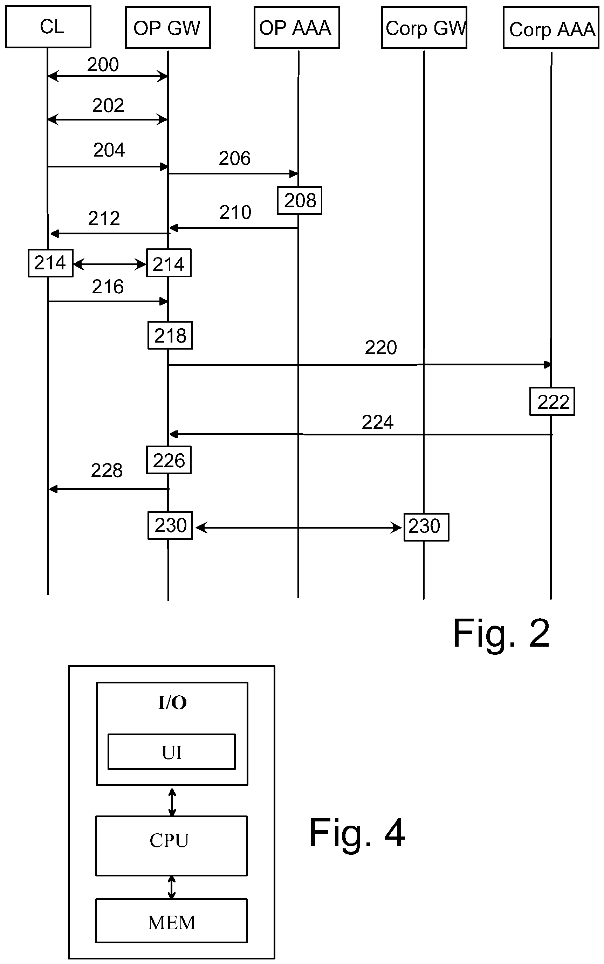

An embodiment of an authentication/authorisation method utilizing the IKEv2 for performing a two-phase authentication/authorisation of a client terminal, i.e. against an operator's AAA system in the first phase and against an external AAA system in the second phase, is further illustrated in a signalling chart of Fig.2. The operation starts when an end-to-end IPsec tunnel establishment between the terminal (CL) and the operator's IPSec gateway (OP GW) is started. This includes the basic IKEv2 negotiation described above, i.e. IKE_SA_INIT exchange (200) and the IKE_AUTH exchange (202) are carried out between the terminal and the IPSec gateway.

However, since the actual authorisation is performed in the operator's AAA system (OP AAA), the initialization of the IKE_SA involves additional IKE_AUTH exchanges (204). If the AAA authorisation is performed as EAP authorisation, the EAP payload type is used for encapsulating the authorisation information and transferring (206) it to the AAA system. The AAA system checks (208) the authorisation information, and if accepted (i.e. it is ensured that the subscriber is a customer of the operator and that he/she is provisioned with the service), the operator's AAA system grants access to the network and acknowledges this via the IPSec gateway to the terminal (210, 212). Then a secured IPSec tunnel is established (214) between the terminal and the operator gateway.

Now, in contrast to the conventional IKEv2 negotiation, the terminal initiates a new authentication/authorization procedure inside the already established IKE SA (or IPSec SA) towards an external AAA entity (e.g. a corporate's AAA system). According to an embodiment, this new authentication/authorization procedure is performed using the IKEv2 INFORMATIONAL exchange (216), for which a new payload type dedicated for this purpose is defined.

Consequently, the operator's IPSec gateway transforms (218) AAA messages/protocol carried inside this new IKEv2 INFORMATIONAL exchange payload to a standard AAA protocol (e.g. RADIUS/Diameter) supported by the external AAA system. Then the operator's IPSec gateway sends (220) messages to the external AAA system, which checks (222) the authorisation information. Again, if the authorisation information is accepted by the external AAA system (i.e. it is ensured that the subscriber is provisioned with the service), the external AAA system grants access to the external network (e.g. a corporate network). Then the external AAA system acknowledges (224) the access grant to the terminal using a reply message according to the standard AAA protocol. Respectively, if the authorisation information is not accepted by the external AAA system (i.e. the subscriber is not provisioned with the service), the external AAA system denies access to the external network, which is also acknowledged to the terminal using the reply message.

The operator IPSec gateway interprets the AAA reply message and transforms (226) it into an IKEv2 INFORMATIONAL exchange with the dedicated payload, after which the operator's IPSec gateway completes the IKEv2 INFORMATIONAL exchange (228). If the access was granted, the operator IPSec gateway establishes (230) another tunnel to the IPSec gateway of the external network. It is notified that this tunnel between the operator IPSec gateway and the IPSec gateway of the external network does not necessarily have to be an IPSec tunnel, but it may as well be any IP tunnel. On the other hand, if the access was denied, the operator IPSec gateway starts terminating the already established IPSec tunnel between the operator gateway and the terminal.

Hence, in the two-phase authentication/authorization procedure according to the embodiment, the second authentication/authorization procedure is carried out inside the already established IKE SA, whereby the messages in the second phase are advantageously encrypted by the IKE SA. Thus, the second authentication/ authorization procedure and the second phase tunnel does not necessarily have to support the whole IPSec; it is only required that the IKEv2 negotiation is supported by the gateways.

According to an embodiment, the gateways and the established tunnels are stateful to the extent that a change in one tunnel affects directly to the other tunnel as well. This can be easily implemented, since the operator's IPSec gateway interprets the AAA reply messages and controls the operation accordingly. For example, if the tunnel of the first phase is removed, also the tunnel of the second phase is removed, and vice versa. Likewise, if the second phase authentication/ authorization procedure results in denial of access, the first phase tunnel is removed automatically. The actual removal procedure of the remaining tunnel can be initiated either by the operator's IPSec gateway or the client terminal. This is a significant advantage compared to the existing solutions, wherein the removal of the tunnel between the terminal and the operator's gateway requires a separate detection of the non-existence of the external tunnel.

According to an embodiment, the authentication/authorization procedure of the second phase is carried out using the INFORMATIONAL exchange of the IKEv2, wherein a new payload type is defined for this dedicated purpose. The IKEv2 includes payload types for transporting various AAA mechanisms, e.g. the EAP payload and the CERT payload. According to an embodiment, these existing payload types can be re-used when determining the new payload type in a sense that the structure of the new payload format may be otherwise similar to these EAP and CERT payload types, but the "Next Payload" field defining the payload type values must naturally be different.

Accordingly, two possible payload type formats for the new payload type are disclosed in Figs. 3a and 3b. The payload type format of Fig. 3a re-uses the structure of the EAP payload format, wherein the first byte of message header includes the "Next Payload" field, wherein the payload type value is defined. The new payload type may preferably be allocated any unused value of payload type values 49 - 127 reserved to IANA. The second byte of message header includes flags, wherein the "critical" flag (C) is set to zero (C=0) if the sender wants the recipient to skip this payload (silent discard), if it does not understand the payload type code in the Next Payload field, and it is set to one (C=1) if the sender wants the recipient to reject this entire message and to reply with an error message UNSUPPORTED_CRITICAL_PAYLOAD in the Notify payload, if it does not understand the payload type. The rest of the flags in the second byte are sent as zeros and they are ignored on receipt. Next two bytes are allocated for the "Payload Length" field, which indicates the length of the current payload, including the generic payload header. The header is then succeeded by the actual AAA message.

Fig. 3b shows another possible payload type format for the new payload type, wherein the payload type format re-uses the structure of the CERT payload format. The Certificate Payload provides a means to transport certificates or other authentication related information via the IKE. Accordingly, it is possible to utilize certificates in the authentication procedure towards the external AAA system. Certificate payloads are included in an exchange if certificates are available to the sender. Again, the four bytes of the header field are similar to those of the payload type format disclosed in Fig. 3a. The CERT payload format includes "Cert Encoding" field, which indicates the type of the certificate or certificate-related information contained in the "Certificate Data" field. The payload type value for the original Certificate Payload is 37, but in order to distinguish this new payload type, it is preferably allocated any of the unused payload type values 49 - 127.

According to an embodiment, at least one new error message and a corresponding error code is defined for the IKEv2. In the IKEv2, error situations are informed using the Notify payload, which may appear in any response message usually specifying why a request was rejected, in an INFORMATIONAL exchange, or in any other message to indicate sender capabilities or to modify the meaning of the request. The IKEv2 includes an error message AUTHENTICATION_FAILED, which has the error code 24. Accordingly, the new error message is preferably defined as SECOND_AUTHENTICATION_FAILED, and it can be allocated any of the unused error code values in the range of 0 - 16383.

By using the above-described payload messages, the two-phase authentication/authorization procedure advantageously remains backwards compatible with the current IKEv2, i.e. if a client terminal or a gateway does not support the new messages, the IKEv2 protocol can still be used; only the features of the second authentication/ authorization procedure are not available. Nonetheless, it is apparent for a skilled man that the above payload messages are just occasional examples of suitable payload messages for the INFORMATIONAL exchange, and there are various other possibilities to define the messages.

Furthermore, according to an embodiment, the two-phase authentication/authorization procedure described above can be carried out such that, instead of using the INFORMATIONAL exchange, a completely new exchange type is defined for the procedure.

The invention is advantageously applicable in the authentication/ authorization of a client terminal via any access technology designed for the third generation (3GPP) or any further generation mobile networks. The invention is particularly useful in providing a further authentication/authorization procedure in a situation, wherein the mobile network services are accessed over unlicensed spectrum technologies, including Bluetooth and IEEE 802.11. These access schemes include at least Unlicensed Mobile Access (UMA) technology, 3GPP GAN and 3GPP I-WLAN. Accordingly, the operator's IPSec gateway described above can preferably be a 3GPP I-WLAN Packet Data Gateway (PDG) included in the 3GPP architecture (Release 6). Naturally, a WLAN network can be used as the access network without any intervening mobile network.

The client terminals A and B may be a PC-based computers, known as such, connected to any data communication network, or the client terminals A and B may be wireless terminals, like mobile stations or PDA devices, connected to any data communication network via a mobile communication network. Accordingly, the client terminal comprises, as illustrated in Fig. 4, memory MEM, a user interface UI, I/O means I/O for arranging data transmission with other devices, and one or more central processing units CPU comprising at least one processor. The memory MEM includes a non-volatile portion for storing the applications controlling the central processing unit CPU and other data to be stored and a volatile portion to be used for temporary data processing.

The actions of the embodiments are preferably automated in the client terminals to the extent that no user intervention is required during the authentication/authorization procedure according to the embodiments. The steps according to the embodiments can be largely implemented with program commands executed in the central processing units CPU of the client terminal illustrated in Fig. 4. Thus, said means for carrying out the method described above are preferably implemented as computer software code. The computer software may be stored into any memory means, such as the hard disk of a PC or a CD-ROM disc, from where it can be loaded into the memory of client terminal. The computer software can also be loaded through a network, for instance using a TCP/IP protocol stack. It is also possible to use hardware solutions or a combination of hardware and software solutions for implementing the inventive means.

It is obvious that the present invention is not limited solely to the above-presented embodiments, but it can be modified within the scope of the appended claims.

## Claims

1. A method for providing an authentication/authorisation of a remote client terminal (100; CL) for use in a network comprising an operator gateway (108; OP GW) and an operator authentication server (110; OP AAA), and an external gateway (112; Corp GW) and an external authentication server (114; Corp AAA), wherein a mutual authentication protocol is agreed between said authentication servers, the method comprising:
establishing (200 - 214) a first secured tunnel between the client terminal (100; CL) and the operator gateway (108; OP GW) using an encryption key exchange protocol;
authenticating (208) and authorising the client terminal (100; CL) in the operator authentication server (110; OP AAA);
initiating (216) a second authentication/authorisation procedure from the client terminal (100; CL) towards the external authentication server (114; Corp AAA) using the first secured tunnel;
transforming (218), in the operator gateway (108; OP GW), at least one message involved in the second authentication/authorisation procedure to be in accordance with said mutual authentication protocol;
authenticating (222) and authorising the client terminal (100; CL) in the external authentication server (108; OP GW) (114; Corp AAA);
establishing (230) a second tunnel between the operator gateway (108; OP GW) and the external gateway (112; Corp GW) (114; Corp AAA), **characterized in that** the encryption key exchange protocol is the Internet Key Exchange (IKE) protocol, whereby the method further comprises:
encrypting the messages involved in the second authentication/authorisation procedure, when transmitted between the client terminal (100; CL) (108; OP GW) and the operator authentication server (110; OP AAA), by the established IKE security association (SA), said messages including at least one IKEv2 INFORMATIONAL message exchange with a dedicated payload field for a second authentication/authorisation procedure; and
controlling the maintenance of the first secured tunnel and the second secured tunnel in the operator gateway (108; OP GW) such that in response to a removal of the first tunnel, the second tunnel is removed directly.

2. The method according to claim 1, **characterized by**
in response to the second authentication/authorisation procedure not succeeding, indicating the failure in an error message with a dedicated payload field for the failure of the second authentication/authorisation procedure.

3. A communication network comprising:
a client terminal (100; CL) (108; OP GW);
an operator gateway (108; OP GW) and an operator authentication server (110; OP AAA);
an external gateway (112; Corp GW) and an external authentication server (114; Corp AAA);
wherein a mutual authentication protocol is agreed between said authentication servers, wherein
the client terminal (100; CL) and the operator gateway (108; OP GW) are arranged to establish a first secured tunnel between each other using an encryption key exchange protocol;
the operator authentication server (110; OP AAA) is arranged to authenticate and authorise the client terminal (100; CL);
the client terminal (100; CL) is arranged to initiate a second authentication/authorisation procedure towards the external authentication server (114; Corp AAA) using the first secured tunnel;
the operator gateway (108; OP GW) is arranged to transform at least one message involved in the second authentication/authorisation procedure to be in accordance with said mutual authentication protocol;
the external authentication server (114; Corp AAA) is arranged to authenticate and authorise the client terminal (100; CL);
the operator gateway (108; OP GW) is arranged to establish a second tunnel to the external gateway (112; Corp GW) for granting an access to the terminal, **characterized in that**
the encryption key exchange protocol is the Internet Key Exchange (IKE) protocol;
the messages involved in the second authentication/authorisation procedure, when transmitted between the client terminal (100; CL) and the operator authentication server (110; OP AAA), are arranged to be encrypted by the established IKE security association (SA), said messages including at least one IKEv2 INFORMATIONAL message exchange with a dedicated payload field for a second authentication/authorisation procedure; and
the operator gateway (108; OP GW) is arranged to control the maintenance of the first secured tunnel and the second secured tunnel in such that in response to a removal of the first tunnel, the second tunnel is removed directly.

4. The communication network according to claim 3, **characterized in that**
in response to the second authentication/authorisation procedure not succeeding, the failure is arranged to be indicated in an error message with a dedicated payload field for the failure of the second authentication/authorisation procedure.

## Patentansprüche

1. Ein Verfahren zum Bereitstellen einer Authentifizierung/Autorisierung eines Remote-Client Terminals (100; CL) zur Verwendung in einem Netzwerk mit einem Betreiber-Gateway (108; OP GW) und einem Betreiber-Authentifizierungsserver (110; OP AAA) und einem externen Gateway (112; Corp GW), und einem externen Authentifizierungsserver (114; Corp AAA), wobei ein gegenseitiges Authentifizierungsprotokoll zwischen den Authentifizierungsservern vereinbart wird, wobei das Verfahren Folgendes umfasst:
Erstellen (200 - 214) eines ersten gesicherten Tunnels zwischen dem Client Terminal (100; CL) und dem Betreiber-Gateway (108; OP GW) unter Verwendung eines Chiffrierschlüssel-Austauschprotokolls;
Authentifizierung (208) und Autorisierung des Client Terminals (100; CL) in dem Betreiber-Authentifizierungsserver (110; OP AAA);
Starten (216) eines zweiten Authentifizierungs-/Autorisierungsverfahrens vom Client Terminal (100; CL) zum externen Authentifizierungs-Server (114; Corp AAA) unter Verwendung des ersten gesicherten Tunnels;
Umwandeln (218), in dem Betreiber-Gateway (108; OP GW), von mindestens einer Nachricht, die in dem zweiten Authentifizierungs-/Autorisierungsverfahren beinhaltet ist, um mit dem gegenseitigen Authentifizierungsprotokoll übereinzustimmen;
Authentifizierung (222) und Autorisierung des Client Terminals (100; CL) in dem externen Authentifizierungsserver (108; OP GW) (114; Corp AAA);
Erstellen (230) eines zweiten Tunnels zwischen dem Betreiber-Gateway (108; OP GW) und dem externen Gateway (112; Corp GW) (114; Corp AAA), **dadurch gekennzeichnet, dass** das Chiffrierschlüssel-Austauschprotokoll das Internet-Schlüsselaustausch-Protokoll (IKE) ist, wobei das Verfahren darüber hinaus Folgendes umfasst:
Verschlüsseln der in dem zweiten Authentifizierungs-/Autorisierungsverfahren beinhalteten Nachrichten, wenn sie zwischen dem Client Terminal (100; CL) (108; OP GW) und dem Betreiber-Authentifizierungsserver (110; OP AAA) gesendet werden, mittels der erstellten IKE Sicherheitszuordnung (SA), wobei die Nachrichten mindestens einen IKEv2 INFORMATIONS-Nachrichtenaustausch mit einem zugeordneten Nutzlastfeld für das zweite Authentifizierung/Autorisierungsverfahren enthält; und
Steuern der Wartung des ersten gesicherten Tunnels und des zweiten gesicherten Tunnels in dem Betreiber-Gateway (108; OP GW) derart, dass als Reaktion auf das Entfernen des ersten Tunnels der zweite Tunnel direkt entfernt wird.

2. Verfahren gemäß Anspruch 1, **gekennzeichnet durch** als Reaktion darauf, dass das zweite Authentifizierung/Autorisierungsverfahren fehlschlägt, Anzeigen des Fehlschlagens in einer Fehlermeldung mit einem zugeordneten Nutzlastfeld für das Fehlschlagen des zweiten Authentifizierungs-/Autorisierungsverfahrens.

3. Ein Kommunikationsnetzwerk, das Folgendes aufweist:
einen Client Terminal (100; CL) (108; OP GW);
ein Betreiber-Gateway (108; OP GW) und einen Betreiber-Authentifizierungsserver (110; OP AAA);
ein externes Gateway (112; Corp GW) und einen externen Authentifizierungsserver (114; Corp AAA);
wobei ein gegenseitiges Authentifizierungsprotokoll zwischen den Authentifizierungsservern vereinbart wird, wobei
der Client Terminal (100; CL) und das Betreiber-Gateway (108; OP GW) dazu eingerichtet sind, einen ersten gesicherten Tunnel untereinander unter Verwendung eines Chiffrierschlüssel-Austauschprotokolls zu erstellen;
der Betreiber-Authentifizierungsserver (110; OP AAA) dazu eingerichtet ist, den Client Terminal (100; CL) zu authentifizieren und zu autorisieren;
der Client Terminal (100; CL) dazu eingerichtet ist, ein zweites Authentifizierungs-/Autorisierungsverfahren zum externen Authentifizierungsserver (114; Corp AAA) unter Verwendung des ersten gesicherten Tunnels zu starten;
das Betreiber-Gateway (108; OP GW) dazu eingerichtet ist, mindestens eine Nachricht, die in dem zweiten Authentifizierungs-/Autorisierungsverfahren beinhalteten ist, umzuwandeln, um mit dem gegenseitigen Authentifizierungsprotokoll übereinzustimmen;
der externe Authentifizierungsserver (114; Corp AAA) dazu eingerichtet ist, den Client Terminal (100; CL) zu authentifizieren und zu autorisieren;
das Betreiber-Gateway (108; OP GW) dazu eingerichtet ist, einen zweiten Tunnel zu dem externen Gateway (112; Corp GW) zum Gewähren eines Zugangs zum Terminal zu erstellen, **dadurch gekennzeichnet, dass**
das Chiffrierschlüssel-Austauschprotokoll das Internet-Schlüsselaustausch-Protokoll (IKE) ist;
die in dem zweiten Authentifizierungs-/Autorisierungsverfahren beinhalteten Nachrichten, wenn sie zwischen dem Client Terminal (100; CL) und dem Betreiber-Authentifizierungsserver (110; OP AAA) gesendet werden, dazu eingerichtet sind, mittels der erstellten IKE Sicherheitszuordnung (SA) verschlüsselt zu werden, wobei die Nachrichten mindestens einen IKEv2 INFORMATIONS-Nachrichtenaustausch mit einem zugeordneten Nutzlastfeld für ein zweites Authentifizierungs-/Autorisierungsverfahren enthalten; und
die Betreiber-Gateway (108; OP GW) dazu eingerichtet ist, die Wartung des ersten gesicherten Tunnels und des zweiten gesicherten Tunnels so zu steuern, dass als Reaktion auf das Entfernen des ersten Tunnels der zweite Tunnel direkt entfernt wird.

4. Kommunikationsnetzwerk gemäß Anspruch 3, **dadurch gekennzeichnet, dass**
als Reaktion darauf, dass das zweite Authentifizierung/Autorisierungsverfahren fehlschlägt, das Fehlschlagen so eingerichtet ist, um in einer Fehlermeldung mit einem zugeordneten Nutzlastfeld für die Fehlfunktion des zweiten Authentifizierungs-/Autorisierungsverfahrens angezeigt zu werden.

## Revendications

1. Un procédé de fourniture d'une authentification/autorisation d'un terminal client distant (100; CL) destinée à une utilisation dans un réseau comprenant une passerelle d'opérateur (108; OP GW) et un serveur d'authentification d'opérateur (110; OP AAA), et une passerelle externe (112; Corp GW) et un serveur d'authentification externe (114; Corp AAA), un protocole d'authentification mutuel étant convenu entre lesdits serveurs d'authentification, le procédé comprenant :
l'établissement (200 - 214) d'un premier tunnel sécurisé entre le terminal client (100; CL) et la passerelle d'opérateur (108; OP GW) au moyen d'un protocole d'échange de clés de chiffrement,
l'authentification (208) et l'autorisation du terminal client (100; CL) dans le serveur d'authentification d'opérateur (110; OP AAA);
le lancement (216) d'une deuxième procédure d'authentification/autorisation à partir du terminal client (100; CL) vers le serveur d'authentification externe (114; Corp AAA) au moyen du premier tunnel sécurisé,
la transformation (218), dans la passerelle d'opérateur (108; OP GW), d'au moins un message impliqué dans la deuxième procédure d'authentification/autorisation de façon à être conforme audit protocole d'authentification mutuel,
l'authentification (222) et l'autorisation du terminal client (100; CL) dans le serveur d'authentification externe (108; OP GW) (114; Corp AAA);
l'établissement (230) d'un deuxième tunnel entre la passerelle d'opérateur (108; OP GW) et la passerelle externe (112; Corp GW) (114; Corp AAA), **caractérisé en ce que** le protocole d'échange de clés de chiffrement est le protocole d'échange de clés par Internet (IKE), grâce à quoi le procédé comprend en outre :
le chiffrement des messages impliqués dans la deuxième procédure d'authentification/autorisation lorsqu'ils sont transmis entre le terminal client (100; CL) (108; OP GW) et le serveur d'authentification d'opérateur (110; OP AAA), par l'association de sécurité (SA) IKE établie, lesdits messages comprenant au moins un échange de messages IKEv2 INFORMATIONAL avec un champ de charge utile dédié pour une deuxième procédure d'authentification/autorisation, et
la commande de la maintenance du premier tunnel sécurisé et du deuxième tunnel sécurisé dans la passerelle d'opérateur (108; OP GW) de sorte que, en réponse à un retrait du premier tunnel, le deuxième tunnel soit directement retiré.

2. Le procédé selon la revendication 1, **caractérisé par**
en réponse à un échec de la deuxième procédure d'authentification/autorisation, l'indication de l'échec dans un message d'erreur avec un champ de charge utile dédié pour l'échec de la deuxième procédure d'authentification/autorisation.

3. Un réseau de communication comprenant :
un terminal client (100; CL) (108; OP GW),
une passerelle d'opérateur (108; OP GW) et un serveur d'authentification d'opérateur (110; OP AAA),
une passerelle externe (112; Corp GW) et un serveur d'authentification externe (114; Corp AAA),
dans lequel un protocole d'authentification mutuel est convenu entre lesdits serveurs d'authentification, dans lequel
le terminal client (100; CL) et la passerelle d'opérateur (108; OP GW) sont agencés de façon à établir un premier tunnel sécurisé entre eux au moyen d'un protocole d'échange de clés de chiffrement,
le serveur d'authentification d'opérateur (110; OP AAA) est agencé de façon à authentifier et autoriser le terminal client (100; CL),
le terminal client (100; CL) est agencé de façon à lancer une deuxième procédure d'authentification/autorisation vers le serveur d'authentification externe (114; Corp AAA) au moyen du premier tunnel sécurisé,
la passerelle d'opérateur (108; OP GW) est agencée de façon à transformer au moins un message impliqué dans la deuxième procédure d'authentification/autorisation de façon à être conforme audit protocole d'authentification mutuel,
le serveur d'authentification externe (114; Corp AAA) est agencé de façon à authentifier et autoriser le terminal client (100; CL),
la passerelle d'opérateur (108; OP GW) est agencée de façon à établir un deuxième tunnel vers la passerelle externe (112; Corp GW) de façon à attribuer un accès au terminal, **caractérisé en ce que**
le protocole d'échange de clés de chiffrement est le protocole d'échange de clés par Internet (IKE),
les messages impliqués dans la deuxième procédure d'authentification/autorisation, lorsqu'ils sont transmis entre le terminal client (100; CL) et le serveur d'authentification d'opérateur (110; OP AAA), sont agencés de façon à être chiffrés par l'association de sécurité (SA) IKE établie, lesdits messages comprenant au moins un échange de messages IKEv2 INFORMATIONAL avec un champ de charge utile dédié pour une deuxième procédure d'authentification/autorisation, et
la passerelle d'opérateur (108; OP GW) est agencée de façon à commander la maintenance du premier tunnel sécurisé et du deuxième tunnel sécurisé de sorte que, en réponse à un retrait du premier tunnel, le deuxième tunnel soit directement retiré.

4. Le réseau de communication selon la revendication 3, **caractérisé en ce que**
en réponse à un échec de la deuxième procédure d'authentification/autorisation, l'échec est agencé de façon à être indiqué dans un message d'erreur avec un champ de charge utile dédié pour l'échec de la deuxième procédure d'authentification/autorisation.
